# FASCICULE DE BREVET EUROPEEN

(11) **EP 0 526 310 B1**
(45) Date de publication et mention de la délivrance du brevet: **03.07.1996**
(21) Numéro de dépôt: 92402121.5
(22) Date de dépôt: 22.07.1992
(51) Int. Cl.: E21B 33/13, C04B 28/02, C04B 24/38

(54) **Utilisation du scléroglucane comme additif à haute température pour les laitiers de ciment**
Verwendung von Skleroglucane als Hochtemperaturzusatz für Zementschlämme
Use of scleroglucan as high temperature additive for well cements

(30) Priorité: 01.08.1991 FR 9109939
(43) Date de publication de la demande: 03.02.1993
(73) Titulaire: INSTITUT FRANCAIS DU PETROLE, F-92502 Rueil-Malmaison (FR)
(72) Inventeur: Cartalos, Ulysse, Résidence les Caravelles, F-92500 Rueil Malmaison (FR); Lecourtier, Jacqueline, F-92500 Rueil Malmaison (FR); Rivereau, Alain, F-92500 Rueil Malmaison (FR)

(56) Documents cités:
- EP-A- 0 146 981
- EP-A- 0 432 770
- EP-A- 0 434 544
- EP-A- 0 453 366
- EP-A- 0 459 881
- GB-A- 2 212 489
- US-A- 4 457 372
- US-A- 4 462 836

## Description

L'invention concerne l'utilisation du scléroglucane comme additif viscosifiant à haute température pour les laitiers de ciment. Elle concerne toute opération faisant intervenir un laitier de ciment avec un niveau de viscosité élevé à haute température (des températures typiquement supérieures à 90°C). Elle s'applique à l'industrie pétrolière pour la cimentation des puits pour la récupération d'un fluide gazeux et/ou liquide à partir d'une formation souterraine poreuse. Elle s'applique aussi à la cimentation des puits géothermiques. Plus particulièrement, elle s'applique à la mise en place du ciment dans l'espace annulaire entre les parois du puits et le tubage d'exploitation.

Cette opération vise à donner une meilleure résistance mécanique au tubage mais surtout à assurer une étanchéité parfaite entre les divers zones de la formation poreuse. La mise en place s'effectue en général de la façon suivante : le ciment est introduit dans le tubage à la tête du puits et est ensuite poussé à descendre au fond et à remonter dans l'espace annulaire en chassant un fluide de forage et éventuellement un fluide tampon. La réussite de la cimentation dépend du déplacement efficace du fluide de forage par le ciment. Ce déplacement est d'autant plus efficace que le fluide qui pousse est à la fois plus lourd et plus visqueux que le fluide déplacé.

Alors que la densité est une propriété facilement contrôlable, il n'en est pas de même pour les propriétés rhéologiques. Ces dernières peuvent varier considérablement dans les conditions sévères de température et de pression rencontrées dans un puits. Nos travaux ont montré que les propriétés rhéologiques des formulations classiques de laitier sont peu sensibles à la pression mais dépendent fortement de la température.

Des viscosifiants habituels de laitier, comme certains polymères de haut poids moléculaire tels que des dérivés cellulosiques, peuvent apporter des niveaux de viscosité importants, à température ambiante. Or, ils perdent leur effet à des températures de l'ordre de 100°C. La raison principale de ce phénomène est que ces produits ne présentent pas une bonne stabilité chimique en présence de fortes teneurs en calcium et de pH élevés des laitiers.

C'est le cas notamment des laitiers de ciments mentionnés dans le brevet US 4,462,836 qui comprennent un ciment, un hydroxyéthylcellulose éther ou un mélange de ce dernier avec de l'hydroxypropylcellulose, un dispersant et au moins un polysaccharide produit par action bactérienne. Parmi les polysaccharides cités, le xanthane est exemplifié tandis que celui provenant du sclérotium glucanicum est suggéré. Ces produits sont désignés en tant qu'agent retardateur et en tant qu'agent améliorant la résistance à la compression, alors que les dérivés cellulosiques agissent comme viscosifiant. n est même enseigné dans ce brevet (exemples 17 à 18) à 124°C, qu'une quantité relativement plus grande de polysaccharide (xanthane) ne contribue pas à améliorer la viscosité.

Par ailleurs, le brevet EP-A-432 770 décrit une composition hydraulique qui contient un matériau avec un ciment, sous forme de poudre, du β - 1,3 glucane et un dispersant, utilisée à température ambiante dans les mortiers et les bétons. L'apport du β - 1,3 glucane selon ce brevet est de réduire la ségrégation des particules de ciment lors de la mise en place des mortiers et des bétons.

Enfin, l'art antérieur est illustré par les brevets EP-A-0 434 544, US-A-4,457,372 et GB-A-2,212,489.

L'effet de la température est beaucoup plus prononcé pour le ciment que pour le fluide de forage. De 25 à 120°C, par exemple, la contrainte de cisaillement à un taux de cisaillement donné peut chuter d'un facteur 10 pour le laitier, alors que pour le fluide de forage elle diminue d'un facteur compris entre 2 et 4. Ainsi, alors qu'à température ambiante on peut avoir des laitiers nettement plus épais que le fluide de forage, à 120°C le ciment peut devenir nettement moins visqueux. Ceci peut avoir des conséquences graves sur la réussite de la cimentation (prise non-homogène conduisant à une perte partielle ou totale de l'étanchéité).

Un des objets de la présente invention est de remédier aux inconvénients ci-dessus et de répondre au problème technique soulevé.

De manière plus précise, l'invention concerne l'utilisation d'une composition pour cimenter un puits de pétrole, un puits de gaz ou un puits géothermique comprenant de l'eau, du ciment, comme agent retardateur un composé autre qu'un polysaccharide et comme agent viscosifiant une solution de scléroglucane dans le but d'augmenter le seuil de contraire (τ₀) de la composition.

On a observé que la composition obtenue présentait d'excellentes propriétés rhéologiques dans un domaine de températures très large, par exemple entre 90 et 250°C, et notamment dans un domaine de températures élevées 90 à 200°C et plus particulièrement entre 120 et 180°C par exemple 125 à 170°C.

Le scléroglucane est un polysaccharide non-ionique produit par fermentation de carbohydrates à partir, par exemple, du champignon Sclerotium Rolsifii (ATCC 15206). Ce polymère est très rigide du fait de sa structure moléculaire en triple hélice, ce qui lui permet de conserver son pouvoir viscosifiant à haute température.

Selon une caractéristique de l'invention, la teneur exprimée en poids en scléroglucane dans la composition injectée est en général au moins égale à 200 ppm, par exemple comprise entre 200 et 5000 ppm (partie par million), avantageusement comprise entre 500 et 4000 ppm et de façon préférée comprise entre 1200 et 3500 ppm.

Selon une autre caractéristique, la composition injectée dans le puits peut comprendre un composé ou produit retardateur, en quantité comprise entre 0 et 5 % et avantageusement entre 0,5 et 4 %.

La quantité d'eau introduite dans la composition peut varier de 20 à 80 %, avantageusement de 30 à 60 %.

Le choix spécifique de la formulation est fixé par le fluide de forage utilisé. Les rhéogrammes des fluides de forage peuvent souvent être interprétés par la loi de Bingham: τ=τₒ+µₚγ̇, où τ est la contrainte de cisaillement, γ̇ le taux de cisaillement, τ₀ le seuil de contrainte et µₚ la viscosité plastique.

Pour des fluides de forage peu visqueux, par exemple ceux dont le rhéogramme se situe à 120°C entre celui d'un fluide de Bingham de caractéristiques τ₀=1Pa et µₚ=7mPa.s et d'un fluide de Bingham de caractéristiques τ₀=3Pa et µₚ=25mPa.s, la teneur en scléroglucane dans la composition peut varier préférentiellement de 500 à 2000 ppm et celle en produit retardateur, par exemple le produit HR13L, commercialisé par Halliburton, qui est un mélange de lignosulfonates et de dérivés de sucre peut varier de 1 à 4% en poids de manière préférée. Par contre, pour des fluides de forage plus visqueux, par exemple ceux dont le rhéogramme se situe à 120°C entre celui d'un fluide de Bingham de caractéristiques τ₀=3Pa et µₚ=25mPa.s et d'un fluide de Bingham de caractéristiques τ₀= 15Pa et µₚ=45mPa.s, la formulation peut comprendre avantageusement 2000 à 4000 ppm de scléroglucane et de 1 à 3 % en poids de produit retardateur tel que HR13L.

Des gammes de valeurs analogues peuvent être recommandées avec d'autres produits retardateurs conventionnels tels que des polymères sulfonés, des dérivés cellulosiques et des dérivés de lignine.

Selon une autre caractéristique du procédé, le rapport pondéral eau sur ciment est généralement de 0,35 à 0,7 et de préférence de 0,4 à 0,6. Le ciment utilisé peut comprendre les ciments de la classe A, B, C, D, E, F, G, H et J. On a obtenu d'excellents résultats à des températures atteignant 200°C, avec des ciments de classe G contenant outre du scléroglucane et un produit retardateur HR13L, de la silice (S8 par exemple) qui confère une meilleure résistance mécanique à la gaine formée.

Selon une autre caractéristique, le rapport pondéral silice sur ciment peut varier de 0 à 1 et de préférence de 0,6 à 0,8.

On a observé que l'utilisation du scléroglucane comme additif viscosifiant à haute température pour les laitiers de ciment permettait de maintenir les niveaux de viscosité élevés, en raison vraisemblablement de sa bonne stabilité chimique.

Le laitier peut être fabriqué de la façon suivante : on dissout d'abord le polymère selon l'invention dans de l'eau. Après homogénéisation la solution est introduite dans un mixeur du type Waring Blender. Le ciment et éventuellement la silice y sont rajoutés et le mélange est agité à forte vitesse pendant environ 30 secondes et ensuite à faible vitesse pendant 20 minutes. Les temps de pompabilité des laitiers peuvent être ajustés entre 3 et 8 heures par ajout d'une quantité convenable de retardateur conventionnel, suivant les exigences opératoires.

L'injection de la composition dans le puits à cimenter est réalisée selon les techniques conventionnelles : on injecte dans le tubage la composition à un débit déterminé qui pousse dans l'espace annulaire entre le tubage et la formation forée un fluide tampon, ce dernier poussant à son tour le fluide de forage.

Le domaine de pressions concernées dans ledit puits lors de l'injection de la composition est en général de 50 à 1500 bar et de préférence de 100 à 1000 bar, (1 bar = 10⁵ Pa).

L'invention sera mieux comprise au vu des exemples et figures ci-dessous illustrant le procédé selon l'invention de manière non limitative, parmi lesquelles :
- la figure 1 compare les rhéogammes de la composition selon l'invention et d'une composition selon l'art antérieur,
- la figure 2 illustre l'influence de la température sur des compositions différentes selon l'invention,
- la figure 3 montre des rhéogrammes obtenus en fonction de la concentration en scléroglucane.
- la figure 4 montre des rhéogrammes obtenus comparativement avec du scléroglucane et du xanthane.

### Exemple 1

Un rhéomètre Fann 70 a été utilisé pour relever les rhéogrammes des compositions selon l'invention testées. Cet appareil offre la possibilité d'explorer une grande gamme de pressions (jusqu'à 1400bar) et de températures (jusqu'à 260°C). Le fluide est cisaillé dans une géométrie de Couette (cylindres coaxiaux, cylindre extérieur mobile). La vitesse angulaire Ω imposée à la partie mobile et le couple C mesuré sur la partie fixe peuvent être reliés à un taux de cisaillement γ̇ et la contrainte τ à la paroi du cylindre fixe.

Les fluides de forage et les laitiers de ciment sont des fluides dont les propriétés varient avec le temps, à un taux de cisaillement donné. Ces fluides thixotropes peuvent atteindre un état de structure stable, lorsqu'ils sont cisaillés pendant une certaine durée de temps. Pendant les essais, l'échantillon est alors cisaillé pendant quelques minutes à une vitesse de rotation donnée et la mesure est prise après stabilisation.

Les mesures rhéologiques ont été effectuées selon le protocole suivant. Une fois le rhéomètre rempli, on commence par relever un rhéogramme en augmentant, puis en diminuant la vitesse de rotation, à 25°C et ensuite à des températures intermédiaires jusqu'à par exemple 160°C. On maintient alors la température et on augmente la pression en répétant le processus à des valeurs de pression intermédiaires. Après avoir relevé le rhéogramme à 1400 bar (montée + descente) on refait des mesures en baissant progressivement la pression et par la suite la température. On observe une bonne reproductibilité en général, qui indique que les mesures correspondent d'une part à un état de structure stable et que d'autre part l'échantillon n'est pas dégradé.

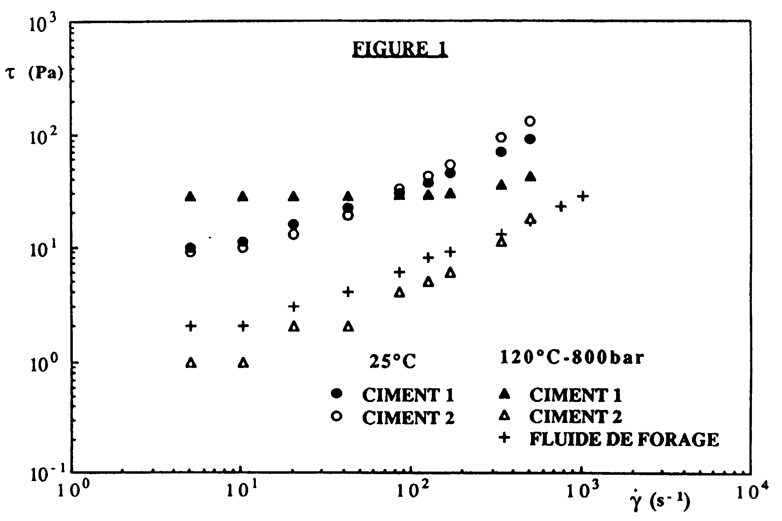

L'effet du scléroglucane sur les propriétés rhéologiques du laitier est montré sur la figure 1, où l'on compare les rhéogrammes de la composition selon l'invention (ciment 1) et d'une composition selon l'art antérieur (ciment 2). Les compositions du ciment 1 et du ciment 2 sont données dans le tableau I.

**Tableau I**

| Ciment 1 | | | Ciment 2 | | |
|---|---|---|---|---|---|
| Origny G | 1000g | (52%) | Origny G | 1000g | (52%) |
| Silice S8 | 350g | (18%) | Silice S8 | 350g | (18%) |
| Eau | 550g | (28%) | Eau | 550g | (28%) |
| HR13L | 30g | (1,55%) | HR13L | 25g | (1,29%) |
| Scléroglucane | 2,75g | (1420ppm) | Halad 22A | 10g | (5170ppm) |

La contrainte τ, exprimée en Pascal, est portée en ordonnée tandis que le taux de cisaillement γ̇, en s⁻¹, est porté en abscisse. Les teneurs en viscosifiant ont été choisis pour qu'à 25°C les deux laitiers aient des propriétés comparables. On note, donc, le pouvoir viscosifiant plus élevé du scléroglucane; l'économie du procédé va s'en trouver améliorée. Il est clair qu'à 120°C et sous 800 bar, le laitier conventionnel (ciment 2) perd sa viscosité et devient même moins visqueux qu'un fluide de forage utilisé à ces conditions de puits, alors que le laitier avec du scléroglucane (ciment 1) reste suffisamment épais.

### Exemple 2

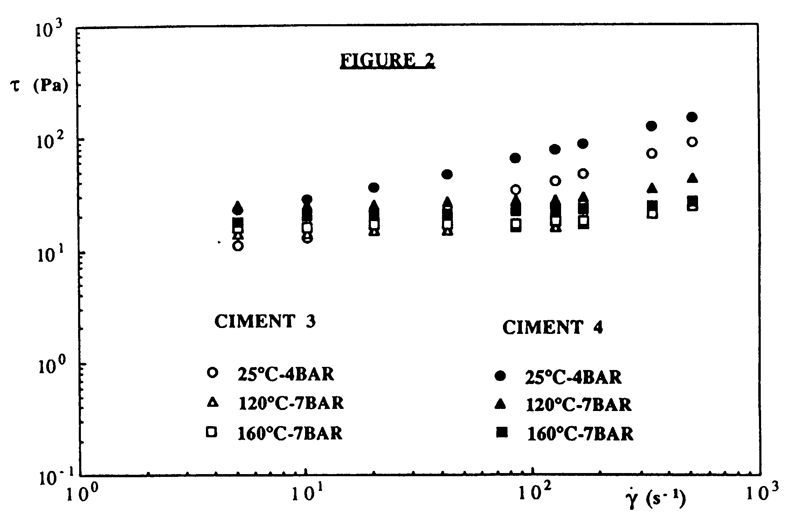

On montre sur la figure 2 l'évolution des rhéogrammes avec la température pour deux concentrations de scléroglucane différentes. Les deux formulations testées ont la même teneur en ciment, silice et eau que le ciment 1 de l'exemple 1. Elles contiennent 40g de HR13L (2,06%) et leur teneur en scléroglucane est de
Ciment 3 :2,75g ( 1420ppm)
Ciment 4 :4,00g (2060ppm)

Des bonnes propriétés rhéologiques sont obtenues à des températures aussi hautes que 160°C.

### Exemple 3

Des études sur un laitier de classe F et H ont été effectués dans les mêmes conditions que dans l'exemple 1. Les ciments 5 (classe F) et 6 (Classe H) qui sont viscosifiés par du scléroglucane (1420ppm) ont les mêmes concentrations concernant les autres constituants que le ciment 1 de l'exemple 1. Les propriétés rhéologiques à 160°C et 500 bar de ces ciments sont comparées dans le tableau II d'une part à celles des ciments 5.1 et 6.1 de même formulation mais sans scléroglucane et d'autre part à celles des ciments 5.2 et 6.2 qui sont viscosifiés avec du Halad 22A et dont les autres constituants sont inchangés. Ce tableau montre le pouvoir viscosifiant du scléroglucane à des températures aussi hautes que 160°C pour ces deux classes de ciment.

**Tableau II**

| **a) Ciment de classe F** | | | |
|---|---|---|---|
| Ciment | **5** | **5.1** | **5.2** |
| Viscosifiant | scléroglucane | scléroglucane | Halad 22A |
| (ppm) | 1420 | 0 | 5170 |
| | | | |
| γ̇(s⁻¹) | τ(Pa) | τ(Pa) | τ(Pa) |
| 85 | 7 | 0,7 | 1,0 |
| 170 | 7,5 | 0,9 | 1,3 |
| 340 | 9 | 1,5 | 1,8 |
| 510 | 13 | 2,4 | 2,9 |
| 1020 | 35 | 3,2 | 4,0 |
| | | | |

| **b) Ciment de classe H** | | | |
|---|---|---|---|
| Ciment | **6** | **6.1** | **6.2** |
| Viscosifiant | scléroglucane | scléroglucane | Halad 22A |
| (ppm) | 1420 | 0 | 5170 |
| | | | |
| γ̇(s⁻¹) | τ(Pa) | τ(Pa) | τ(Pa) |
| 85 | 5 | | 0,9 |
| 170 | 6 | 0,7 | 1,2 |
| 340 | 7,5 | 1,0 | 1,5 |
| 510 | 10 | 1,5 | 2,6 |
| 1020 | 28 | 2,5 | 3,6 |

### Exemple 4

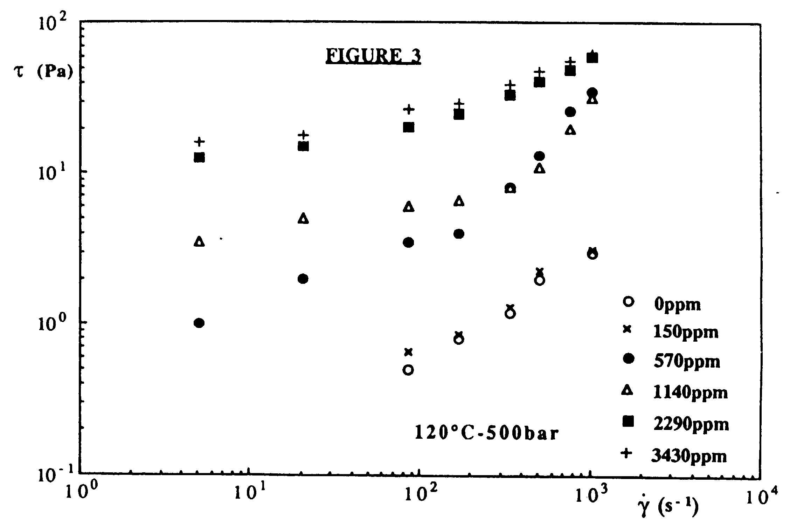

L'évolution des rhéogrammes des formulations de laitier (même composition concernant les autres constituants que le ciment 1 de l'exemple 1) avec la teneur en scléroglucane (de 0 à 3430ppm) est donnée sur la figure 3. Cette figure montre qu'aux environs de 150ppm la teneur en scléroglucane n'est pas suffisante pour montrer des propriétés nettement améliorées. Elle montre aussi que des ciments bien adaptés peuvent être formulées pour des fluides de forage couvrant une très large gramme de propriétés rhéologiques.

### Exemple 5

On compare l'action du scléroglucane à maintenir un niveau de viscosité convenable à forte température par rapport au xanthane. Pour ceci, on formule un laitier de ciment avec du scléroglucane et un laitier de ciment avec du xanthane à la même concentration (570 ppm), les autres constituants étant aux mêmes concentrations que celles indiquées à l'exemple 1.

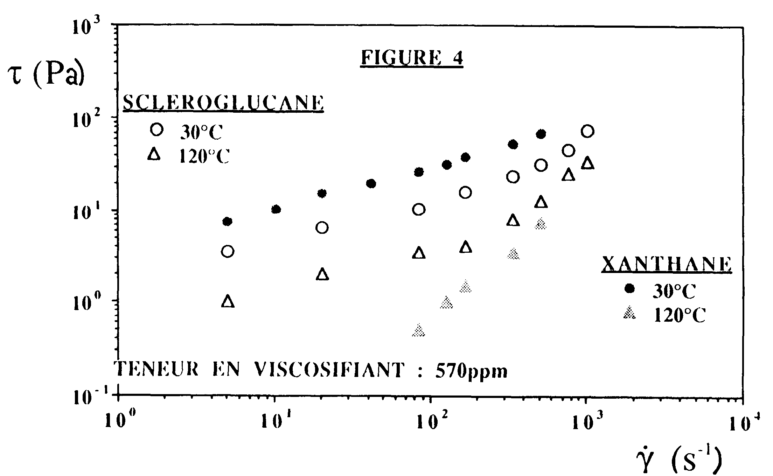

Les rhéogrammes obtenus sont indiqués sur la figure 4. A 30° C, le xanthane a un niveau de viscosité plus élevé que le scléroglucane, probablement lié à sa plus grande longueur de chaîne. Par contre, à 120° C, le xanthane perd son pouvoir viscosifiant et son niveau de viscosité se situe en dessous de celui du scléroglucane.

## Revendications

1. Utilisation d'une composition pour cimenter un puits de pétrole, un puits de gaz ou un puits géothermique comprenant de l'eau, du ciment, comme agent retardateur un composé autre qu'un polysaccharide et comme agent viscosifiant une solution de scléroglucane dans le but d'augmenter le seuil de contraire (τ₀) de la composition, la température de cimentation étant de 90 à 250° C et avantageusement de 120 à 180° C.

2. Utilisation selon la revendication 1, dans laquelle la teneur en poids en scléroglucane dans la composition est de 200 à 5000 ppm, avantageusement de 500 à 4000 ppm et de façon préférée de 1200 à 3500 ppm.

3. Utilisation selon l'une des revendications 1 à 2 dans laquelle la teneur en retardateur dans la composition est de 0 à 5 % et avantageusement de 0,5 à 4 %.

4. Utilisation selon l'une des revendications 1 à 3 dans laquelle la teneur en poids en scléroglucane dans la composition est de 500 à 2000 ppm et celle en composé retardateur de 1 à 4%, lorsque le fluide de forage a un rhéogramme qui se situe à 120°C entre le rhéogramme d'un fluide de Bingham de caractéristiques τ₀=1Pa et µₚ=7mPa.s et d'un fluide de Bingham de caractéristiques τ₀=3Pa et µₚ=25mPa.s.

5. Procédé selon l'une des revendications 1 à 3 dans lequel la teneur en poids en scléroglucane est de 2000 à 4000 ppm et celle en composé retardateur de 1 à 3% lorsque le fluide de forage a un rhéogramme qui se situe à 120°C entre le rhéogramme d'un fluide de Bingham de caractéristiques τ₀=3Pa et µₚ=25mPa.s et d'un fluide de Bingham de caractéristiques τ₀=15Pa et µₚ=45mPa.s.

6. Utilisation selon l'une des revendications 1 à 5 dans laquelle le rapport pondéral eau sur ciment est de 0,35 à 0,7 et de préférence de 0,4 à 0,6.

7. Utilisation selon l'une des revendications 1 à 6 dans laquelle le rapport pondéral silice sur ciment est de 0 à 1 et de préférence de 0,6 à 0,8.

8. Utilisation selon l'une des revendications 1 à 7 dans laquelle la température de cimentation est de 90 à 200°C.

9. Utilisation selon l'une des revendications 1 à 8 dans laquelle la température de cimentation est de 120°C à 180°C.

10. Utilisation selon l'une des revendications 1 à 9 dans laquelle la pression dans ledit puits lors de l'injection de la composition est de 50 à 1500 bar et de préférence de 100 à 1000 bar.

## Patentansprüche

1. Verwendung einer Zusammensetzung zum Zementieren eines Erdölbohrlochs, eines Gasbohrlochs oder eines geothermischen Bohrlochs, welche Wasser, Zement, als Reaktionsverzögerungsmittel eine von einem Polysaccharid verschiedene Verbindung, als viskosifizierendes Mittel eine Lösung von Skleroglucan zu dem Zweck umfaßt, die Spannungsgrenze (τ₀) der Zusammensetzung zu steigern, wobei die Zementierungstemperatur 90 bis 250°C und vorteilhaft 120 bis 180°C beträgt.

2. Verwendung nach Anspruch 1, worin der Gewichtsgehalt an Skleroglucan in der Zusammensetzung 200 bis 5000 ppm, vorteilhaft 500 bis 4000 ppm und in bevorzugter Weise von 1200 bis 3500 ppm beträgt.

3. Verwendung nach einem der Ansprüche 1 bis 2, worin der Gehalt an Reaktionsverzögerungsmittel in der Zusammensetzung 0 bis 5 % und vorteilhaft 0,5 bis 4 % beträgt.

4. Verwendung nach einem der Ansprüche 1 bis 3, worin der Gewichtsgehalt an Skleroglucan in der Zusammensetzung 500 bis 2000 ppm und derjenige der reaktionsverzögernden Verbindung 1 bis 4 % beträgt, wenn die Bohrflüssigkeit ein Rheogramm aufweist, das sich bei 120°C zwischen dem Rheogramm einer Bingham-Flüssigkeit mit einer Charakteristik von τ₀ = 1 Pa und µₚ = 7 mPa.s und einer Bingham-Flüssigkeit mit einer Charakteristik von τ₀ = 3 Pa und µₚ = 25 mPa.s befindet.

5. Verfahren nach einem der Ansprüche 1 bis 3, worin der Gewichtsgehalt an Skleroglucan 2000 bis 4000 ppm und derjenige der reaktionsverzögernden Verbindung 1 bis 3 % beträgt, wenn die Bohrflüssigkeit ein Rheogramm aufweist, das sich bei 120°C zwischen dem Rheogramm einer Bingham-Flüssigkeit mit der Charakteristik von τ₀ = 3 Pa und µₚ = 25 mPa.s und einer Bingham-Flüssigkeit mit einer Charakteristik von τ₀= 15 Pa und µₚ = 45 mPa.s befindet.

6. Verwendung nach einem der Ansprüche 1 bis 5, worin das Gewichtsverhältnis Wasser zu Zement 0,35 bis 0,7 und vorzugsweise 0,4 bis 0,6 beträgt.

7. Verwendung nach einem der Ansprüche 1 bis 6, worin das Gewichstverhältnis Siliciumdioxid zu Zement 0 bis 1 und vorzugsweise 0,6 bis 0,8 beträgt.

8. Verwendung nach einem der Ansprüche 1 bis 7, worin die Zementierungstemperatur 90 bis 200°C beträgt.

9. Verwendung nach einem der Ansprüche 1 bis 8, worin die Zementierungstemperatur 120 bis 180°C beträgt.

10. Verwendung nach einem der Ansprüche 1 bis 9, worin der Druck im Bohrloch während der Injektion der Zusammensetzung 50 bis 1500 bar und vorzugsweise 100 bis 1000 beträgt.

## Claims

1. Use of a composition for cementing an oil well, a gas well or a geothermal well, comprising water, cement, a compound other than a polysaccharide as retarding agent and a scleroglucan solution as viscosity enhancing agent for enhancing the stress threshold (τ₀) of the composition,the cementing temperature being from 90 to 250°C and advantageously from 120 to 180°C.

2. Use according to claim 1, wherein the content by weight of scleroglucan in the composition is 200 to 5000 ppm, advantageously 500 to 4000 ppm and preferably 1200 to 3500 ppm.

3. Use according to claims 1 to 2, wherein the content of retarding agent in the composition is from 0 to 5% and advantageously from 0.5 to 4%.

4. Use according to claims 1 to 3, wherein the content by weight of scleroglucan in the composition is 500 to 2000 ppm and that of retarding compound from 1 to 4%, when the drilling fluid has a rheology graph which is located at 120°C between the rheology graph of a Bingham fluid with characteristics τ₀ = 1 Pa and µₚ = 7 mPa.s and a Bingham fluid with characteristics τ₀ = 3 Pa and µₚ = 25 mPa.S.

5. Use according to claims 1 to 3, wherein the content by weight of scleroglucan is from 2000 to 4000 ppm and that of retarding compound from 1 to 3% when the drilling fluid has rhelogy graph which is located at 120°c between the rheology graph of a Bingham fluid with characteristics τ₀ = 3 Pa and µₚ = 25 mPa.s and Bingham fluid with characteristics τ₀ = 15 Pa and µₚ = 45 mPa.s.

6. Use according to one of claims 1 to 5, wherein the water to cement weight ratio is from 0.35 to 0.7 and preferably from 0.4 to 0.6.

7. Use according to one of claims 1 to 6 in which the silica to cement weight ratio is from 0 to 1 and preferably from 0.6 to 0.8.

8. Use according to one of claims 1 to 7, wherein the cementing temperature is from 40 to 250°C.

9. Use according to one of claims 1 to 8, wherein the cementing temperature is from 120 to 180°C.

10. Use according to one of claims 1 to 9, wherein the pressure in said well during the injection of the composition is from 50 to 1500 bars and preferably from 100 to 1000 bars.
